# EUROPÄISCHE PATENTSCHRIFT

(11) **EP 4 178 714 B1**
(45) Veröffentlichungstag und Bekanntmachung des Hinweises auf die Patenterteilung: **15.11.2023**
(21) Anmeldenummer: 21785825.7
(22) Anmeldetag: 27.09.2021
(51) Int. Cl.: B01J 8/06, B01J 19/24

(54) **VORRICHTUNG UND VERFAHREN ZUR REGELBAREN DURCHFÜHRUNG EINER CHEMISCHEN REAKTION**
DEVICE AND METHOD FOR PERFORMING A CHEMICAL REACTION IN A CONTROLLABLE MANNER
DISPOSITIF ET PROCÉDÉ DE RÉALISATION RÉGLABLE D'UNE RÉACTION CHIMIQUE

(30) Priorität: 28.09.2020 EP 20198794
(43) Veröffentlichungstag der Anmeldung: 17.05.2023
(73) Patentinhaber: Linde GmbH, 82049 Pullach (DE); BASF SE, 67056 Ludwigshafen am Rhein (DE)
(72) Erfinder: LANG, Christian, 81479 München (DE); HOFSTÄTTER, Martin, 81369 München (DE); ZELLHUBER, Mathieu, 82152 Martinsried (DE); WELLENHOFER, Anton, 82069 Hohenschäftlarn (DE); STEGEMANN, Robert, 81543 München (DE); REISER, Peter, 82541 Münsing (DE); FLEISCHMANN, Niklas, 81373 München (DE); ZIEGLER, Christian, 80636 München (DE); POSSELT, Heinz, 83043 Bad Aibling (DE); DELHOMME-NEUDECKER, Clara, 81825 München (DE); SHUSTOV, Andrey, 67059 Ludwigshafen am Rhein (DE); JENNE, Eric, 67454 Hassloch (DE); KÜHN, Heinz-Jürgen, 67593 Westhofen (DE); KOCHENDÖRFER, Kiara Aenne, 68159 Mannheim (DE); LAIB, Heinrich, 67117 Limburgerhof (DE); JACOB, Reiner, 67691 Hochspeyer (DE)
(74) Vertreter: Reuß, Stephanie
(86) Internationale Anmeldenummer: PCT/EP2021/076543
(87) Internationale Veröffentlichungsnummer: WO 2022/064051

(56) Entgegenhaltungen:
- WO-A1-2020/035575
- DE-A1-102011 077 970
- DE-A1-102015 004 121

## Beschreibung

Die Erfindung betrifft eine Vorrichtung und ein Verfahren zur regelbaren Durchführung einer chemischen Reaktion in einem Reaktor mit wenigstens einem beheizbaren Reaktionsrohr.

### Stand der Technik

In einer Reihe von Verfahren in der chemischen Industrie werden Reaktoren eingesetzt, in denen ein oder mehrere Reaktanden durch beheizte Reaktionsrohre geführt und dort katalytisch oder nichtkatalytisch umgesetzt werden. Die Beheizung dient dabei insbesondere dazu, die benötigte Aktivierungsenergie für die ablaufende chemische Reaktion zu überwinden. Die Reaktion kann insgesamt endotherm oder, nach Überwindung der Aktivierungsenergie, exotherm ablaufen. Die vorliegende Erfindung betrifft insbesondere stark endotherme Reaktionen.

Beispiele für solche Verfahren sind das Steamcracken (Dampfspalten), unterschiedliche Reformierungsverfahren, insbesondere die Dampfreformierung, die Trockenreformierung (Kohlendioxidreformierung), gemischte Reformierungsverfahren, Verfahren zur Dehydrierung von Alkanen und dergleichen. Beim Steamcracken werden die Reaktionsrohre dabei in Form von Rohrschlangen (engl. Coils), die im Reaktor zumindest einen Umkehrbogen aufweisen, durch den Reaktor geführt, wohingegen bei der Dampfreformierung typischerweise ohne Umkehrbogen durch den Reaktor verlaufende Rohre verwendet werden.

Die Erfindung eignet sich für alle derartigen Verfahren und Ausgestaltungen von Reaktionsohren. Rein illustrativ wird hier auf die Artikel "Ethylene", "Gas Production" und "Propene" in Ullmann's Encyclopedia of Industrial Chemistry, beispielsweise die Publikationen vom 15 April 2009, DOI: 10.1002/14356007.a10_045.pub2, vom 15. Dezember 2006, DOI: 10.1002/14356007.a12_169.pub2, und vom 15. Juni 2000, DOI: 10.1002/14356007.a22_211, verwiesen.

Die Reaktionsrohre von entsprechenden Reaktoren werden herkömmlicherweise durch Verwendung von Brennern beheizt. Die Reaktionsrohre werden dabei durch eine Brennkammer geführt, in der auch die Brenner angeordnet sind.

Wie beispielsweise in der DE 10 2015 004 121 A1 (zugleich EP 3 075 704 A1) beschrieben, steigt gegenwärtig jedoch beispielsweise die Nachfrage nach Synthesegas und Wasserstoff, die ohne oder mit reduzierten lokalen Kohlendioxidemissionen hergestellt werden. Diese Nachfrage kann aber durch Verfahren, in denen befeuerte Reaktoren eingesetzt werden, aufgrund der Verfeuerung typischerweise fossiler Energieträger nicht bedient werden. Andere Verfahren scheiden beispielsweise aufgrund hoher Kosten aus. Entsprechendes gilt auch für die Bereitstellung von Olefinen und/oder anderer Kohlenwasserstoffe durch Steamcracken oder Dehydrierung von Alkanen. Auch in solchen Fällen besteht der Wunsch nach Verfahren, die zumindest vor Ort geringere Mengen an Kohlendioxid emittieren.

Vor diesem Hintergrund wird in der erwähnten DE 10 2015 004 121 A1 eine elektrische Beheizung eines Reaktors zur Dampfreformierung zusätzlich zu einer Befeuerung vorgeschlagen. Hierbei werden eine oder mehrere Spannungsquellen verwendet, die eine Dreiphasenwechselspannung an drei Außenleitern bereitstellt oder bereitstellen. Jeder Außenleiter wird an einem Reaktionsrohr angeschlossen. Es wird eine Sternschaltung gebildet, bei der ein Sternpunkt durch einen Sammler realisiert wird, in den die Rohrleitungen einmünden, und mit dem die Reaktionsrohre leitend verbunden sind. Auf diese Weise bleibt der Sammler idealerweise potentialfrei. Der Sammler ist bezogen auf die Vertikale unterhalb sowie außerhalb der Brennkammer angeordnet und erstreckt sich bevorzugt quer zu den Reaktorrohren bzw. entlang der Horizontalen. Die WO 2015/197181 A1 offenbart ebenfalls einen Reaktor, dessen Reaktionsrohre in Sternpunktschaltung angeordnet sind. Die WO 2020/035575 A1 betrifft eine Einrichtung zum elektrischen Erhitzen eines Fluids mittels wenigstens eines Gleichstroms. Die DE 10 2011 077 970 A1 betrifft eine Vorrichtung mit in einer Behandlungskammer angeordneten elektrisch leitfähigen Heizelementen zur Temperaturbehandlung von korrosiven Gasen.

Beim Betrieb solcher Reaktoren mit elektrisch beheizten Reaktionsrohren kann es einerseits zu einer Änderung der elektrischen Eigenschaften (Widerstände) der Reaktionsrohre kommen, und andererseits können Änderungen der Menge und/oder der Zusammensetzung der Reaktionsprodukte gewünscht sein. Es besteht also die Aufgabe einer Anpassbarkeit der Betriebsbedingungen des Reaktors bzw. der Reaktionsparameter einer damit durchgeführten chemischen Reaktion während des Betriebs an solche Änderungen. Darüber hinaus besteht auch die Aufgabe einer Anpassbarkeit der elektrotechnischen Betriebsbedingungen, insbesondere bei Verwendung mehrphasiger Wechselspannung an den Außenleitern, an solche Änderungen.

### Offenbarung der Erfindung

Diese Aufgabe wird gelöst durch ein Verfahren und eine Vorrichtung zur regelbaren Durchführung einer chemischen Reaktion mit den Merkmalen der unabhängigen Ansprüche.

Die chemische Reaktion läuft in mehreren Reaktionsrohren ab, durch die das Prozessfluid, d.h. das Fluid mit den Reaktanden (typischerweise ein Gas bzw. Gasgemisch) geleitet wird. Rohrstrecken der Reaktionsrohre sind elektrisch beheizbar, wobei die Rohrstrecken mit Stromanschlüssen an eine (oder mehrere) steuerbare Stromquelle bzw. Spannungsquelle angebunden sind, an denen elektrische Ströme bzw. Spannungen zur elektrischen Beheizung bereitgestellt werden. Die Spannungen werden als Phasen einer mehrphasigen Wechselspannung bereitgestellt. Erfindungsgemäß können die an den Stromanschlüssen anliegenden Spannungen, insbesondere individuell, verändert werden. Dies ermöglicht einerseits, die Heizleistungen an den Rohrstrecken bei variierenden elektrischen Eigenschaften konstant zu halten. Eine Änderung der elektrischen Eigenschaften kann z.B. durch induktive Effekte aufgrund elektromagnetischer Felder stromführender Bauteile, variable Temperaturen innerhalb des Reaktors, eine während des Betriebs entstehende Koksschicht, variabler Wärmebedarf durch veränderliche Endothermie/Exothermie der Reaktionen oder auch Fertigungstoleranzen bzw. Materialschwankungen verursacht sein. Andererseits können die Heizleistungen gezielt variiert werden, um eine Anpassung der Zusammensetzung der Reaktionsprodukte, die insbesondere von der Prozesstemperatur abhängig ist, zu ermöglichen. Darüber hinaus kann die Heizleistung auch gezielt variiert werden, um eine Anpassung der Menge der Reaktionsprodukte, bei kontrollierter Zusammensetzung, durchführen zu können.

Die chemische Reaktion eine der folgenden: Steam-Cracking (Dampfspalten), Steam-Reforming (Dampfreformierung), Dry-Reforming (Trockenreformierung, Kohlendioxidreformierung), Propandehydrierung, allgemein Reaktionen mit Kohlenwasserstoffen, die zumindest teilweise bei mehr als 500°C durchgeführt werden. Allgemeiner kann es sich bei der chemischen Reaktion um eine chemische Reaktion handeln die zumindest teilweise bei einer Temperatur im Bereich von 200 °C bis 1700 °C, insbesondere von 300 °C bis 1400 °C bzw. von 400 °C bis 1100 °C, abläuft. Bevorzugt handelt es sich bei der chemischen Reaktion um eine chemische Reaktion, die zumindest teilweise bei einer Temperatur von mindestens 500 °C, weiter bevorzugt von mindestens 700 °C, abläuft, insbesondere zumindest teilweise in einem Temperaturbereich von 500 °C bzw. 700°C bis 1100 °C. Die bereitgestellten elektrischen Spannungen/Ströme sind entsprechend geeignet entsprechende Heizleistungen zu erbringen. Ebenso sind der Reaktor und die Stromquelle eingerichtet, chemische Reaktionen bei diesen Temperaturen durchzuführen und entsprechende Heizleistungen zu erbringen.

Spezifischer ist der Reaktor mit mehreren Reaktionsrohren versehen, die eine Anzahl elektrisch beheizbarer Rohrstrecken aufweisen, wobei mehrere Stromanschlüsse vorgesehen sind, die in einem Stromeinspeisebereich jeweils mit mindestens einer der Rohrstrecken verbunden sind, wobei in einem Stromabgabebereich wenigstens ein Verbindungselement vorgesehen ist und jede der Rohrstrecken mit einem Verbindungselement verbunden ist. Im Einzelnen umfasst das erfindungsgemäße Verfahren zur geregelten Durchführung einer chemischen Reaktion in einem Reaktor ein Leiten eines Prozessfluids durch die mehreren Reaktionsrohre, ein Bereitstellen mehrerer veränderbarer Spannungen an den mehreren Stromanschlüssen, wobei die mehreren Spannungen als Phasen einer mehrphasigen Wechselspannung bereitgestellt werden, so dass das wenigstens eine Verbindungselement einen Sternpunkt (Verbindungselement-Sternpunkt) bildet, ein Einstellen der mehreren Spannungen, ein Erfassen einer oder mehrerer Messgrößen, und ein Verändern der mehreren eingestellten Spannungen, so dass Messwerte der erfassten Messgrößen vorbestimmten Werten bzw. Wertebereichen der Messgrößen entsprechen.

Die mehreren bereitgestellten Spannungen liegen dabei in einem oder mehreren vorbestimmten Spannungsbereichen, denen an die elektrisch beheizten Rohrstrecken abgegebene Heizleistungen entsprechen, die die chemische Reaktion in den Rohrstrecken ermöglichen, d.h. die diese auf eine geeignete Temperatur heizen.

Messeinrichtungen, mit denen diese Messgrößen erfasst werden, und ihre Anordnung werden im Zusammenhang mit Ausführungsformen der erfindungsgemäßen Vorrichtung beschrieben. Die Veränderung bzw. Steuerung der Spannungen an den Stromanschlüssen erfolgt in Abhängigkeit von Messwerten der durch die Messeinrichtungen erfassten Messgrößen. Diese Veränderung erfolgt so, dass die Messwerte vorgegebenen Werten bzw. Wertebereichen der Messgrößen entsprechen. Die Formulierung "entsprechen" ist hier so zu verstehen, dass die Messwerte den vorgegebenen Werten gleichen oder möglichst nahekommen bzw. in den vorgegebenen Wertebereichen liegen. Es wird also insbesondere ein Regelkreis realisiert, wobei die Spannungen als Stellgrößen und die Messgrößen als Regelgrößen angesehen werden können.

Die Spannungen bzw. die entsprechenden elektrischen Ströme werden als Wechselspannungen bzw. Wechselströme bereitgestellt. Die Stromeinspeisung erfolgt in Form von mehrphasigem Wechselstrom in die direkt beheizten Reaktionsrohre bzw. deren Rohrstrecken über M separat angeschlossene Phasen, die den Stromanschlüssen zugeordnet sind (jeder Stromanschluss ist also mit einer der Phasen verbunden). Die stromleitenden Reaktionsrohre bzw. Rohrstrecken, die über die Stromanschlüsse mit den M Phasen verbunden sind, werden an einem Sternpunkt vorteilhafterweise durch das Verbindungselement (im Stromabgabebereich) ebenfalls elektrisch leitend verbunden. Die Phasenzahl M beträgt insbesondere 3, entsprechend der Phasenzahl üblicher Drehstromquellen bzw. Drehstromnetze. Grundsätzlich ist die vorliegende Erfindung aber nicht auf die Verwendung von drei Phasen beschränkt, sondern kann auch mit einer anderen, insbesondere größeren, Phasenzahl, beispielsweise einer Phasenzahl von 2, 4, 5, 6, 7 oder 8, verwendet werden. Ein Phasenversatz beträgt dabei insbesondere 360°/M, d.h. bei einem dreiphasigen Drehstrom 120°. Vorteil mehrphasigen Wechselstroms ist, dass sich die Ströme der Phasen im Sternpunkt bei im Wesentlichen symmetrischer Belastung gegenseitig aufheben, so dass kein oder nur wenig elektrischer Rückstrom zur Spannungsversorgung bzw. Stromquelle auftritt. Die Spannungen werden also als Phasen einer mehrphasigen Wechselspannung bereitgestellt. Die dazu verwendete Stromquelle ist entsprechend bevorzugt eine mehrphasige Wechselstromquelle.

Bevorzugt umfassen die Messgrößen eines oder mehreres von wenigstens einer Temperatur, wenigstens einer Stromstärke, und/oder wenigstens einer Stoffzusammensetzung. Dadurch kann die Regelung der chemischen Reaktion in Abhängigkeit von wenigstens einer Prozesstemperatur, wenigstens einer Heizleistung (die von der Stromstärke abhängig ist), oder wenigstens einer Zusammensetzung des Reaktionsprodukts oder der Ursprungsreaktanden (d.h. eine Stoffzusammensetzung des Prozessfluids am Rohreingang oder am Rohrausgang) erfolgen. Es können also entsprechende gewünschte Werte/-bereiche erzielt werden.

Die mehreren Spannungen können in gleicher Weise verändert werden, d.h. sie werden gemeinsam, nicht unabhängig voneinander geändert. Vorzugsweise werden die mehreren Spannungen unabhängig voneinander verändert, d.h. jede der Spannungen kann individuell, unabhängig von den anderen Spannungen eingestellt werden.

Bevorzugt umfassen die eine oder mehreren Messgrößen eines oder beides von: einer an einem Rohrausgang der mehreren Reaktionsrohre gemessenen Rohrausgangs-Temperatur des Prozessfluids, und/oder einer an einem Rohrausgang der mehreren Reaktionsrohre gemessenen Stoffzusammensetzung des Prozessfluids. Weiter bevorzugt werden die mehreren Spannungen so verändert, dass die gemessene Rohrausgangs-Temperatur und/oder die gemessene Stoffzusammensetzung einer vorbestimmten Rohrausgangs-Temperatur und/oder einer vorbestimmten Stoffzusammensetzung gleicht oder möglichst nahe kommt bzw. innerhalb eines vorbestimmten Wertebereichs liegt. Die Zusammensetzung des Reaktionsprodukts ist insbesondere von der Prozesstemperatur (für die die Rohrausgangs-Temperatur ein Maß ist), mit der die chemische Reaktion abläuft, abhängig und daher über diese regeltechnisch direkt beeinflussbar. Durch Änderung der Spannungen und damit der Heizleistung können so bestimmte gewünschte Zusammensetzungen des Reaktionsprodukts erreicht werden. Sind mehrere Reaktionsrohre vorhanden, können die Messgrößen entsprechend mehrere Rohrausgangs-Temperaturen und/oder mehrere Stoffzusammensetzungen an Rohrausgängen umfassen. Auch ist es möglich, als Messgrößen zusätzlich oder alternativ entsprechende an einem oder mehreren Rohreingängen gemessene Temperaturen oder Stoffzusammensetzungen zu verwenden, d.h. die Messgrößen können eine oder mehrere Rohreingangs-Temperaturen und/oder eine oder mehrere Rohreingangs-Stoffzusammensetzungen umfassen. Darüber hinaus ist es möglich, als Messgrößen zusätzlich oder alternativ entsprechende an einer oder mehreren Zwischenpositionen an einem oder mehreren Reaktionsrohren gemessene Temperaturen zu verwenden, d.h. die Messgrößen können eine oder mehrere Zwischenpositions-Temperaturen an einem oder mehreren Reaktionsrohren umfassen.

Bevorzugt umfassen die eine oder mehreren Messgrößen eines oder beides von: zwei oder mehreren an mit verschiedenen Stromanschlüssen verbundenen Rohrstrecken gemessenen Rohrstrecken-Temperaturen, oder zwei oder mehreren an verschiedenen Stromanschlüssen gemessenen Stromanschluss-Stromstärken. Weiter bevorzugt werden die mehreren Spannungen an den verschiedenen Stromanschlüssen so gesteuert, dass die gemessenen Rohrstrecken-Temperaturen vorbestimmten Rohrstrecken-Temperaturen entsprechen und/oder aus den Stromstärken berechnete Leistungsabgaben an die mit den verschiedenen Stromanschlüssen verbundenen Rohrstücke vorbestimmten Leistungsabgaben entsprechen. Dies ermöglicht es, mit unterschiedlichen Stromanschlüssen verbundene Rohrstrecken mit unterschiedlich hohen Heizleistungen zu versorgen, so dass insbesondere auch unterschiedliche Temperaturen an diesen unterschiedlichen Rohrstrecken eingestellt werden können. Hier tritt gegebenenfalls ein erhöhter Rückstrom über einen Neutralleiter auf.

Sind unterschiedliche Rohrstrecken eines einzelnen Reaktionsrohrs (Rohrschlange) mit unterschiedlichen Stromanschlüssen verbunden, kann ein gewünschtes Heizleistungsprofil oder Temperaturprofil entlang des Reaktionsrohrs erzeugt werden. Vorzugsweise umfasst das Verfahren also Einstellen unterschiedlicher Spannungen an unterschiedlichen Rohrstrecken eines Reaktionsrohrs, die mit unterschiedlichen Stromanschlüssen verbunden sind, um diese Rohrstrecken mit unterschiedlichen Heizleistungen zu versorgen.

Bevorzugt umfassen die eine oder mehreren Messgrößen eines oder beides von: einer an einem Neutralleiter gemessenen Neutralleiter-Stromstärke, oder zwei oder mehreren an verschiedenen Stromanschlüssen gemessenen Stromanschluss-Stromstärken. Weiter bevorzugt werden die Spannungen so verändert, dass die Neutralleiter-Stromstärke minimiert wird und/oder eine unter Berücksichtigung der relativen Phasen berechnete Summe der Stromanschluss-Stromstärken minimiert wird. Mit anderen Worten die Neutralleiter-Stromstärke bzw. die Summe der Stromanschluss-Stromstärken soll möglichst einem Stromstärkenwert von Null entsprechen. Die zweite Möglichkeit ist insbesondere dann von Vorteil, wenn kein Neutralleiter vorgesehen ist. Offensichtlich kann diese Änderung der Spannungen nur innerhalb gewisser Spannungsbereiche erfolgen, die Heizleistungen entsprechen, die für den Ablauf der chemischen Reaktion geeignet bzw. notwendig sind (die Spannungen werden also insbesondere nicht auf Null gesetzt). Tritt eine nicht symmetrische Belastung durch die elektrisch beheizten Rohrstrecken auf (etwa wenn verschiedenen Rohrestrecken verschiedene elektrische Widerstände aufweisen), kann dies durch diese Ausgestaltung zumindest teilweise kompensiert werden.

Die erfindungsgemäße Vorrichtung zur geregelten Durchführung einer chemischen Reaktion in einem Prozessfluid umfasst: einen Reaktor mit mehreren Reaktionsrohren, die eine Anzahl elektrisch beheizbarer Rohrstrecken aufweisen, wobei mehrere Stromanschlüsse vorgesehen sind, die in einem Stromeinspeisebereich jeweils mit mindestens einer der Rohrstrecken verbunden sind, wobei in einem Stromabgabebereich wenigstens ein Verbindungselement vorgesehen ist und jede der Rohrstrecken mit einem Verbindungselement verbunden ist, so dass dieses einen Sternpunkt (Verbindungselement-Sternpunkt) bildet; wenigstens eine steuerbare Stromquelle (Wechselstromquelle), die eingerichtet ist, mehrere veränderbare Spannungen an den mehreren Stromanschlüssen bereitzustellen, wobei die Stromquelle die mehreren Spannungen als Phasen einer mehrphasigen Wechselspannung bereitgestellt; eine oder mehrere Messeinrichtungen, die eingerichtet sind, eine oder mehrere Messgrößen erfassen; eine Steuervorrichtung, die mit der wenigstens einen Stromquelle und der einen oder den mehreren Messeinrichtungen zur Kommunikation verbunden ist und die eingerichtet ist, die wenigstens eine Stromquelle in Abhängigkeit von der einen oder den mehreren Messgrößen zu steuern. Hier sollten diejenigen Rohrstrecken, die mit verschiedenen Phasen derselben Stromquelle verbunden sind, mit demselben Verbindungselement verbunden sein. Die Veränderung der Spannung kann (hier und auch beim vorstehend beschriebenen Verfahren) in einer Veränderung der (Spannungs-)Amplitude selbst (z.B. mittels Stelltransformatoren) und/oder in einer Veränderung einer zeitlich gemittelten Amplitude (insbesondere des quadratischen Mittels), z.B. mittels Phasenanschnittsteuerung oder Wellenpaketsteuerung (insbesondere Vollschwingungssteuerung), bestehen.

Die Steuervorrichtung ist eingerichtet, eines der vorstehend oder in der weiteren Beschreibung beschriebenen Verfahren durchzuführen. Insbesondere ist die chemische Reaktion eine der folgenden Reaktionen: Dampfspalten, Dampfreformierung, Trockenreformierung, Propandehydrierung, eine Reaktion mit Kohlenwasserstoffen, die zumindest teilweise bei mehr als 500°C durchgeführt wird (d.h. der Reaktor ist eingerichtet, eine dieser chemischen Reaktionen durchzuführen).

Bevorzugt umfassen die eine oder die mehreren Messeinrichtungen eines oder mehreres von: einem oder mehreren Temperatursensoren, die weiter bevorzugt eingerichtet sind, Temperaturen wenigstens einer der Rohrstrecken und/oder Temperaturen des Prozessfluids an wenigstens einem Rohreingang und/oder wenigstens einem Rohrausgang und/oder in wenigstens einer Rohrstrecke zu messen, einem oder mehreren Stromsensoren, die weiter bevorzugt eingerichtet sind, Stromstärken an wenigstens einem Stromanschluss und/oder einem Neutralleiter (der das Verbindungselement mit einem Sternpunkt der Stromquelle verbindet) zu messen, oder einem oder mehreren Stoffzusammensetzungssensoren, die weiter bevorzugt eingerichtet sind, Stoffzusammensetzungen des Prozessfluids an wenigstens einem Rohreingang und/oder wenigstens einem Rohrausgang zu messen.

Die Spannungen können gemeinsam in gleicher Weise veränderbar sein (d.h. die Stromquelle ist entsprechend eingerichtet), wobei bevorzugt die wenigstens eine Stromquelle Leistungssteller, insbesondere Thyristor-Leistungssteller, umfasst, mittels derer die Spannungen veränderbar sind. Alternativ und mehr bevorzugt können die Spannungen unabhängig voneinander veränderbar sein, wobei bevorzugt die wenigstens eine Stromquelle für jede Spannung einen Stelltransformator umfasst, mittels derer die Spannungen unabhängig von einander verändert werden können. Weiterhin kann alternativ oder zusätzlich zu Leistungsstellern und/oder Stelltransformatoren auch eine Leistungselektronik vorgesehen sein, die dieselbe Funktionalität implementiert, z.B. ein sogenanntes flexibles Drehstromübertragungssystem (FACTS, engl. 'flexible alternating current transmission system').

Die eine oder die mehreren Messeinrichtungen umfassen bevorzugt eines oder beides von: einem oder mehreren Temperatursensoren, die an Rohrausgängen der mehreren Reaktionsrohre angeordnet sind, um eine oder mehrere Temperaturen (Rohrausgangs-Temperaturen) des Prozessfluids zu messen, oder einem oder mehreren Stoffzusammensetzungssensoren, die an den Rohrausgängen der mehreren Reaktionsrohre angeordnet sind, um eine oder mehrere Stoffzusammensetzungen des Prozessfluids zu messen. Ebenso können alternativ oder zusätzlich ein oder mehrere Temperatursensoren und/oder eine oder mehrere Stoffzusammensetzungssensoren an Rohreingängen der mehreren Reaktionsrohre angeordnet sein, um Rohreingangs-Temperaturen bzw. Rohreingangs-Stoffzusammensetzungen zu messen.

Bevorzugt umfassen die eine oder die mehreren Messeinrichtungen eines oder beides von: zwei oder mehr Rohrstrecken-Temperatursensoren, die an mit verschiedenen Stromanschlüssen verbundenen Rohrstrecken angeordnet sind, oder zwei oder mehr Stromanschluss-Stromsensoren, die an verschiedenen Stromanschlüssen angeordnet sind. Mit diesen Messeinrichtungen können insbesondere Rohrstrecken-Temperaturen und/oder Stromanschluss-Stromstärken gemessen werden, die bei einem erfindungsgemäßen Verfahren wie oben beschrieben Verwendung finden können. Die Steuervorrichtung ist entsprechend eingerichtet, die Temperaturen der Rohrstrecken und/oder die an die Rohrstrecken abgegebenen Heizleistungen zu regeln. Ist die wenigstens eine Stromquelle in der Lage, die Spannungen an verschiedenen Stromanschlüssen unabhängig voneinander bereitzustellen, können die Temperaturen unterschiedlicher Rohrstrecken bzw. die daran abgegebenen Heizleistungen unabhängig voneinander geregelt werden, d.h. sie können auf unterschiedliche Werte/Wertebereiche eingestellt werden.

Bevorzugt ist die wenigstens eine Stromquelle eingerichtet, die Spannungen unabhängig voneinander bereitzustellen, und die eine oder die mehreren Messeinrichtungen umfassen eines oder beides von: einem Neutralleiter-Stromsensor, der an einem mit dem Verbindungselement verbundenen Neutralleiter angeordnet ist, oder mehrere Stromanschluss-Stromsensoren, die an verschiedenen Stromanschlüssen angeordnet sind. Mit diesen Sensoren können insbesondere die Neutralleiter-Stromstärke und/oder die Stromanschluss-Stromstärken gemessen werden. Weiter bevorzugt (wie bereits im Zusammenhang mit dem Verfahren erwähnt) ist die Steuereinrichtung eingerichtet, die wenigstens eine Stromquelle so zu steuern, dass Spannungen an den Stromanschlüssen bereitgestellt werden, mit denen die Neutralleiter-Stromstärke und/oder die unter Berücksichtigung der Phasen berechnete Summe der Stromanschluss-Stromstärken minimiert wird. Dadurch wird im Prinzip Potentialgleichheit zwischen den vom Neutralleiter verbundenen Elementen, d.h. zwischen dem Verbindungselement und einem Sternpunkt der wenigstens einen Stromquelle, hergestellt. Insbesondere kann dadurch auch die Gefahr, dass Ströme nach außerhalb in eine Produktionsanlage, in der die erfindungsgemäße Vorrichtung aufgebaut ist und die über das Reaktionsrohr am Rohreingang und Rohrausgang elektrisch leitend verbunden ist, fließen und dort elektrische Störungen bzw. davon ausgehende Gefahren verursachen.

Die Ausdrücke "verbunden", "Verbindung", ... sind im Rahmen dieser Anmeldung im Sinne einer elektrisch leitenden Verbindung zu verstehen, falls nichts anderes erwähnt ist.

Das Verfahren bzw. die Vorrichtung kann zusätzlich zur erfindungsgemäßen elektrischen Heizung der Rohrstrecken auch eine nicht-elektrische Heizung des Reaktionsrohrs, etwa durch fossile Brennstoffe, vorsehen. Die Regelung der Durchführung der chemischen Reaktion wird allerdings entsprechend der Erfindung durch Steuerung der an den Stromanschlüssen anliegenden Spannungen erreicht.

Die vorliegende Erfindung wird nachfolgend zunächst unter Bezugnahme auf Reaktionsrohre und Reaktoren beschrieben, wie sie zum Steamcracken oder zur Dampfreformierung zum Einsatz kommen. Die Erfindung kann aber auch in anderen Reaktortypen zum Einsatz kommen. Generell kann, wie erwähnt, der erfindungsgemäß vorgeschlagene Reaktor zur Durchführung aller endothermen chemischen Reaktionen verwendet werden.

Die Erfindung wird nachfolgend unter Bezugnahme auf die beigefügten Figuren weiter erläutert, die Ausgestaltungen der vorliegenden Erfindung veranschaulichen.

### Kurze Beschreibung der Figuren

Figur 1 zeigt eine Vorrichtung gemäß einer bevorzugten Ausführungsform der Erfindung;
Figur 2 zeigt eine Vorrichtung gemäß einer weiteren bevorzugten Ausführungsform der Erfindung;
Figur 3 zeigt eine Stromquelle, die gemäß einer bevorzugten Ausführungsform in einer erfindungsgemäßen Vorrichtung verwendet werden kann;
Figur 4 zeigt eine weitere Stromquelle, die gemäß einer bevorzugten Ausführungsform in einer erfindungsgemäßen Vorrichtung verwendet werden kann; und
Figur 5 zeigt ein Ablaufdiagramm entsprechend einer Ausführungsform des erfindungsgemäßen Verfahrens.

### Ausführliche Figurenbeschreibung

In den Figuren sind einander baulich oder funktionell entsprechende Elemente mit identischen oder ähnlichen Bezugszeichen veranschaulicht und werden der Übersichtlichkeit halber nicht wiederholt erläutert. Werden nachfolgend Komponenten von Vorrichtungen erläutert, betreffen die entsprechenden Erläuterungen jeweils auch die damit durchgeführten Verfahren und umgekehrt. Die Figurenbeschreibung nimmt dabei wiederholt auf eine Wechselstrombeheizung Bezug.

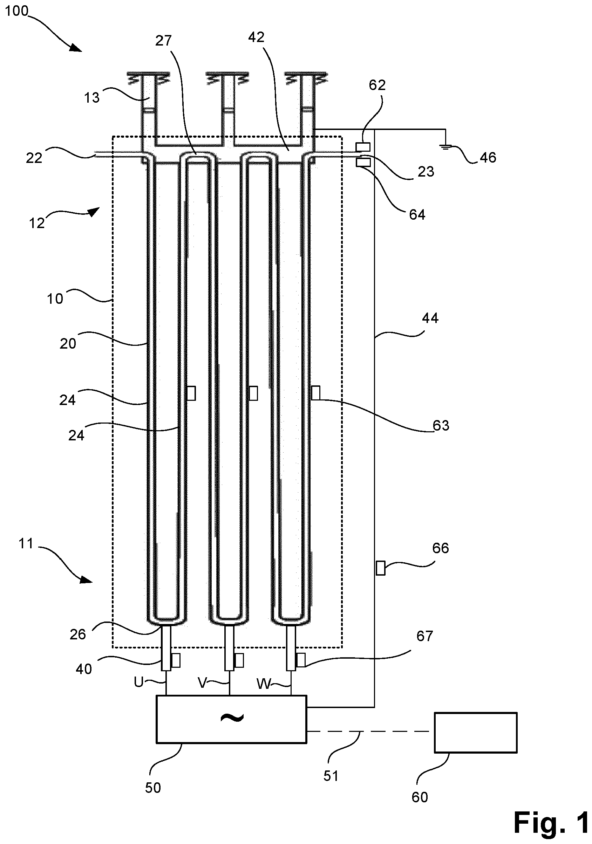

Figur 1 veranschaulicht schematisch eine Vorrichtung zur Durchführung einer chemischen Reaktion gemäß einer erfindungsgemäßen Ausgestaltung.

Die Vorrichtung umfasst einen hier mit 100 bezeichneten Reaktor, der zur Durchführung einer chemischen Reaktion eingerichtet. Er weist dazu insbesondere ein Reaktionsrohr 20 auf, das von einem Rohreingang 22 zu einem Rohrausgang 23 durch einen thermisch isolierten Reaktorbehälter 10 verläuft, wobei eine Anzahl von Rohrstrecken 24 des Reaktionsrohrs 20, die hier nur in zwei Fällen mit 24 bezeichnet sind, jeweils zwischen einem Stromeinspeisebereich 11 und einem Stromabgabebereich 12 in dem Reaktorbehälter 10 verlaufen. Die Rohrstrecken 24 bilden Abschnitte des Reaktionsrohrs 20, die im Stromeinspeisebereich 11 und im Stromabgabebereich 12 jeweils über gebogene Abschnitte des Reaktionsrohrs, genauer erste Umkehrbögen 26 im Stromeinspeisebereich 11 und zweite Umkehrbögen 27 im Stromabgabebereich 12, fluidisch miteinander verbunden sind, so dass eine Rohrschlange gebildet wird, durch die ein Prozessfluid vom Rohreingang 22 zum Rohrausgang 23 geleitet werden kann. Das Reaktionsrohr 20 ist hier beispielhaft an einer nicht weiter dargestellten Stützstruktur mit geeigneten Aufhängungen 13 befestigt, wobei im Prinzip auch anders geartete Haltestrukturen für das Reaktionsrohr denkbar sind. Es versteht sich, dass hier und nachfolgend jeweils mehrere Reaktionsrohre bereitgestellt sein können.

Als Material für das Reaktionsrohr bzw. die Reaktionsrohre wird ein Material mit einer elektrischen Leitfähigkeit verwendet, die für ein elektrisches Heizen des bzw. der Reaktionsrohre geeignet ist, etwa hitzebeständige Stahllegierungen, insbesondere hitzebeständige Chrom-Nickel-Stahllegierungen. Solche Stahllegierungen können ebenfalls für die Stromanschlüsse (über die die elektrischen Ströme in den Reaktorbehälter geleitet werden) und für das Verbindungselement (das zumindest teilweise im Reaktorbehälter angeordnet ist) verwendet werden. Beispielsweise können Materialien mit den Normbezeichnungen GX40CrNiSi25-20, GX40NiCrSiNb35-25, GX45NiCrSiNbTi35-25, GX35CrNiSiNb24-24, GX45NiCrSi35-25, GX43NiCrWSi35-25-4, GX10NiCrNb32-20, GX50CrNiSi30-30, G-NiCr28W, G-NiCrCoW, GX45NiCrSiNb45-35, GX13NiCrNb45-35, GX13NiCrNb37-25, oder GX55NiCrWZr33-30-04 gemäß DIN EN 10027, Teil 1, "Werkstoffe", verwendet werden.

Die Rohrstrecken 24 sind zur elektrischen Beheizung der Rohrstrecken 24 in dem Stromeinspeisebereich 11 jeweils elektrisch mit Phasenanschlüssen U, V, W einer mehrphasigen Stromquelle 50, d.h. einer Wechselstromquelle, elektrisch leitend verbunden bzw. verbindbar (im Weiteren wird eine Stromquelle erläutert, es können aber auch mehrere Stromquellen vorgesehen sein, eine Stromquelle ist also im Sinne von wenigstens einer Stromquelle zu verstehen, wobei die Ausführungen für alle Stromquellen gelten). Schalter und dergleichen sowie die spezifische Art der Anbindung sind nicht veranschaulicht. Die Rohrstrecken 24 sind im Stromeinspeisebereich 11 mit Stromanschlüssen 40 verbunden, wobei jedem der Stromanschlüsse 40 jeweils eine oder mehrere Rohrstrecken (zwei in Figur 1) zugeordnet sind, mit denen der jeweilige Stromanschluss verbunden ist.

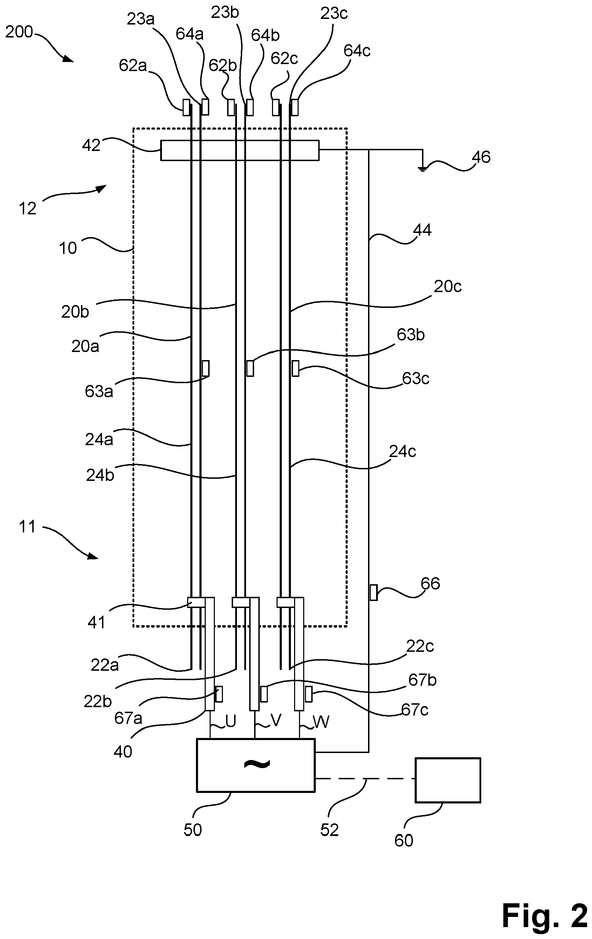

Die Stromquelle 50 ist steuerbar und dazu eingerichtet, veränderbare Spannungen an den Stromanschlüssen 40 bereitzustellen. Hierzu sind die Phasenanschlüsse U, V, W der Stromquelle 50 sind mit Stromanschlüssen 40 verbunden. In der Ausgestaltung nach Figur 1 sind die Stromanschlüsse 40 mit den ersten Umkehrbögen 26 verbunden, die wiederum mit den Rohrstrecken 24 verbunden sind, da Umkehrbögen und Rohrstrecken Abschnitte des Reaktionsrohrs bilden. In dieser Ausgestaltung wird die elektrische Verbindung zwischen Stromanschlüssen und Rohrstrecken also indirekt über die Umkehrbögen hergestellt. Abweichend davon ist aber ebenso eine direkte Verbindung der Stromanschlüsse mit den Rohrstrecken möglich, siehe etwa die Ausführung in Figur 2.

Die Rohrstrecken 24 sind in der hier veranschaulichten Ausgestaltung der Erfindung im Stromabgabebereich 12 mittels eines Verbindungselements 42, das mit dem einen oder den mehreren Reaktionsrohren 20 verbunden und innerhalb des Reaktorbehälters 10 angeordnet ist, elektrisch leitend miteinander verbunden. Daran können auch ein Neutralleiter 44 und/oder eine Erdung 46 angebunden sein. Der Neutralleiter 44 ist mit einem entsprechenden Anschluss der Stromquelle 50 verbunden, etwa an einen Sternpunkt der Stromquelle. Der im Stromeinspeisebereich 11 in die Rohrstrecken 24 eingespeiste Strom wird im Stromabgabebereich 12 von den Rohrstrecken 24 wieder abgegeben. Das Verbindungselement 42 bildet schaltungstechnisch einen Sternpunkt, in dem sich bei geeigneter Versorgung mit phasenverschobenen Strömen (z.B. mit sogenanntem Drehstrom) durch die Spannungsversorgung 50 und symmetrischer Belastung durch die Rohrstrecken 24 die Ströme bzw. Spannungen aufheben, so dass in diesem Fall kein Strom über den Neutralleiter 44 zur Stromquelle und/oder zur Erde 46 fließt.

Weiterhin ist eine Steuervorrichtung 60 vorgesehen, die mit der Stromquelle 50 zur Kommunikation verbunden ist, etwa über eine Steuerleitung 52 (es kann aber eine beliebige drahtgebundene oder drahtlose Verbindung vorgesehen sein), und die dazu eingerichtet ist, die Stromquelle 50 zu steuern, wobei insbesondere die von der Stromquelle 50 an den Stromanschlüssen 40 angelegten Spannungen gesteuert werden können. Dazu ist die Steuervorrichtung 60 eingerichtet, ein erfindungsgemäßes Verfahren durchzuführen. Die Steuervorrichtung 60 (bzw. das von der Steuervorrichtung implementierte Verfahren) führt diese Steuerung in Abhängigkeit von Messgrößen durch, die durch eine oder mehrere Messeinrichtungen erfasst werden.

Als Messeinrichtungen können insbesondere Temperatursensoren, Stoffzusammensetzungssensoren, und Stromsensoren verwendet werden. In Figur 1 ist beispielhaft eine Vielzahl solcher Messeinrichtungen eingezeichnet, die verwendet werden können. Die Messeinrichtungen sind über drahtgebundene oder drahtlose Verbindungen zur Kommunikation bzw. Datenübermittlung mit der Steuervorrichtung 60 verbunden, so dass von den Messeinrichtungen erfasste Messgrößen an die Steuervorrichtung übermittelt werden können. Diese Verbindungen sind in der Figur der Übersichtlichkeit wegen nicht dargestellt. Es sei noch darauf hingewiesen, dass nicht alle eingezeichneten Messeinrichtungen vorgesehen sein müssen und dass auch andere bzw. zusätzliche, nicht eingezeichnete Messeinrichtungen, vorgesehen sein können. Welche Messeinrichtungen vorgesehen sind und gegebenenfalls verwendet werden, hängt davon ab, welche Messgrößen für das von der Steuervorrichtung durchgeführte Verfahren benötigt werden.

In Figur 1 sind die folgenden Messeinrichtungen dargestellt: Ein Temperatursensor 62 am Rohrausgang 23, der die Temperatur des Prozessfluids am Rohrausgang misst. Ein Stoffzusammensetzungssensor 64 am Rohrausgang 23, der die Zusammensetzung des Prozessfluids oder den Anteil bestimmter Stoffe im Prozessfluid am Rohrausgang misst. Temperatursensoren 63 (nur einer mit Bezugszeichen versehen), die an den Rohrstrecken 24 angeordnet sind, um die Temperatur der jeweiligen Rohrstrecke zu messen. Ein Stromsensor 66 am Neutralleiter 44, um die Stromstärke des im Neutralleiter fließenden Stroms (d.h. Strom zwischen Verbindungselement 42 und Stromquelle 50) zu messen. Stromsensoren 67 an den Stromanschlüssen, um durch die Stromanschlüsse fließende Ströme zu messen.

Zusätzlich oder alternativ können beispielsweise auch die folgenden, nicht dargestellten Messeinrichtungen vorgesehen sein: Ein Temperatursensor am Rohreingang 22, der die Temperatur des Prozessfluids am Rohreingang misst. Ein Stoffzusammensetzungssensor am Rohreingang 22, der die Zusammensetzung des Prozessfluids oder den Anteil bestimmter Stoffe im Prozessfluid am Rohreingang misst. Temperatursensoren an zwischen den Rohrstrecken 24 gelegenen Abschnitten des Reaktionsrohrs 20, z.B. an den ersten oder den zweiten Umkehrbögen 26, 27, um Reaktionsrohr-Temperaturen zwischen den Rohrstrecken zu messen.

Figur 2 stellt eine alternative Ausführung einer erfindungsgemäßen Vorrichtung dar. In dieser Ausführung weist der Reaktor 200 mehrere Reaktionsrohre 20a, 20b, 20c mit jeweils einer elektrisch beheizbaren Rohrstrecke 24a, 24b, 24c auf. Die Reaktionsrohre verlaufen durch einen thermisch isolierten Reaktorbehälter 10 und wiesen jeweils Rohreingänge 22a, 22b, 22c und Rohrausgänge 23a, 23b, 23c für zu verarbeitende Prozessfluide auf. Für die weitere Ausgestaltung trifft, soweit anwendbar, wieder das im Zusammenhang mit Figur 1 Gesagte zu, insbesondere verlaufen die Reaktionsrohre wieder durch einen thermisch isolierten Reaktorbehälter 10, wobei sich die Rohrstrecken innerhalb des Reaktorbehälters befinden.

Die Rohrstrecken 24a, 24b, 24c sind in einem Stromeinspeisebereich 11 mit Stromanschlüssen 40 verbunden, z.B. mittels Manschetten 41. Die Stromanschlüsse 40 sind mit einer Stromquelle 50 verbunden, die steuerbar ist und eingerichtet ist, veränderbare Spannungen an den Stromanschlüssen 40 bereitzustellen.

Weiter sind die Rohrstrecken 24a, 24b, 24c in einem Stromabgabebereich 12 leitend mit einem Verbindungselement 42 verbunden, so dass die Rohrstrecken dort leitend miteinander verbunden sind. Das Verbindungselement 42 kann wieder mit einer Erde 46 und/oder einem Neutralleiter 44 verbunden sein, wobei der Neutralleiter 42 mit einem entsprechenden Anschluss der Stromquelle 50 verbunden ist.

Ebenso ist eine Steuerungsvorrichtung 60 vorgesehen, die mit der Stromquelle 50 drahtgebunden oder drahtlos zur Kommunikation verbunden ist (z.B. über eine Steuerleitung 52), so dass die Steuerungsvorrichtung 60 die Stromquelle 50 steuern kann. Für die Steuerung werden wieder von Messeinrichtungen, insbesondere Temperatursensoren, Stoffzusammensetzungssensoren, und Stromsensoren, erfasste Messgrößen verwendet.

In Figur 2 sind wieder beispielhaft mehrere Messeinrichtungen eingezeichnet, die verwendet werden können, um entsprechende Messgrößen zu erfassen. Die Messeinrichtungen sind über drahtgebundene oder drahtlose Verbindungen zur Kommunikation bzw. Datenübermittlung mit der Steuervorrichtung 60 verbunden, so dass von den Messeinrichtungen erfasste Messgrößen an die Steuervorrichtung übermittelt werden können. Diese Verbindungen sind in der Figur der Übersichtlichkeit wegen nicht dargestellt. Es sei noch darauf hingewiesen, dass nicht alle eingezeichneten Messeinrichtungen vorgesehen sein müssen und dass auch zusätzliche, nicht eingezeichnete Messeinrichtungen vorgesehen sein können. Welche Messeinrichtungen vorgesehen sind und gegebenenfalls verwendet werden, hängt davon ab, welche Messgrößen für das von der Steuervorrichtung durchgeführte Verfahren benötigt werden.

In Figur 2 sind die folgenden Messeinrichtungen dargestellt: Temperatursensoren 62a, 62b, 62b an den Rohrausgängen 23a, 23b, 23c, welche die Temperatur der Prozessfluide an den Rohrausgängen messen. Stoffzusammensetzungssensoren 64a, 64b, 64c an den Rohrausgängen 23a, 23b, 23c, welche Zusammensetzungen der Prozessfluide oder den Anteil bestimmter Stoffe in den Prozessfluiden an den Rohrausgängen messen. Temperatursensoren 63a, 63b, 63c, die an den Rohrstrecken 24a, 24b, 24c angeordnet sind, um die Temperatur der jeweiligen Rohrstrecke zu messen. Ein Stromsensor 66 am Neutralleiter 44, um die Stromstärke des im Neutralleiter fließenden Stroms (d.h. Strom zwischen Verbindungselement 42 und Stromquelle 50) zu messen. Stromsensoren 67 an den Stromanschlüssen 40, um durch die Stromanschlüsse fließende Ströme zu messen.

Zusätzlich oder alternativ können beispielsweise auch die folgenden, nicht dargestellten Messeinrichtungen vorgesehen sein: Temperatursensoren an den Rohreingängen 22a, 22b, 22c, welche Temperaturen von Prozessfluiden an den Rohreingängen messen. Stoffzusammensetzungssensoren an den Rohreingängen 22a, 22b, 22c, welche die Zusammensetzung der Prozessfluide oder den Anteil bestimmter Stoffe in den Prozessfluiden an den Rohreingängen messen.

In den Figuren 1 und 2 sind spezifische Ausführungen erfindungsgemäßer Vorrichtungen gezeigt, in denen insbesondere jeweils eine spezifische Ausgestaltung der Reaktionsrohre und derer Anbindung an eine Stromquelle gezeigt sind. Es ist jedoch zu betonen, dass, im Rahmen der Ansprüche (sowohl bei den Vorrichtungsansprüchen als auch bei den Verfahrensansprüchen), andere Ausgestaltungen der Reaktionsrohre und ihrer elektrischen Anbindung an eine Stromquelle, oder auch an mehrere Stromquellen, möglich sind. Insbesondere ist es möglich, dass der Reaktor mehrere Rohrschlangen (ähnlich wie bei Figur 1) umfasst, wobei diese z.B. in einer Art Stapel zueinander parallelverschoben (ausgehend von Figur 1 senkrecht zur Zeichenebene) angeordnet sind.

Diese Menge von Rohrschlangen (im Stapel) kann in Teilmengen unterteilt sein, die jeweils einer Stromquelle zugeordnet sind, wobei auch eine Unterteilung, in der eine Teilmenge nur eine Rohrschlange enthält, oder eine Unterteilung, in der eine (einzige) Teilmenge alle Rohrschlangen enthält, möglich sind. Die Anschlüsse sind dann jeweils einer Teilmenge zugeordnet, die Rohrstrecken der Rohrschlangen der Teilmenge sind mit einem der Anschlüsse, die der Teilmenge zugeordnet sind, verbunden und jeder Teilmenge kann eine Stromquelle zugeordnet sein, deren Phasen mit den Anschlüssen, die der Teilmenge zugeordnet sind, verbunden sind. Für jede Teilmenge ist dann ebenfalls ein Verbindungselement vorgesehen, das die Rohrstreckend er Teilmenge verbindet, wobei es auch möglich ist, das für jede einzelne Rohrschlange ein Verbindungselement vorgesehen ist.

Ebenso kann eine eins-zu-eins-Beziehung zwischen Anschlüssen und Rohrschlangen bestehen (insbesondere bei einer U-förmigen Rohrschlange), d.h. alle Rohrstrecken einer Rohrschlange sind jeweils mit demselben Anschluss verbunden. Da die Anschlüsse jeweils mit verschiedenen Phasen bzw. Spannungen verbunden sind, entspricht dann die Anzahl der Rohrschlangen der Anzahl verschiedener Spannungen oder einem Vielfachen davon. Das eine oder die mehreren Verbindungselemente verbinden dann jeweils Rohrstrecken verschiedener Rohrschlangen.

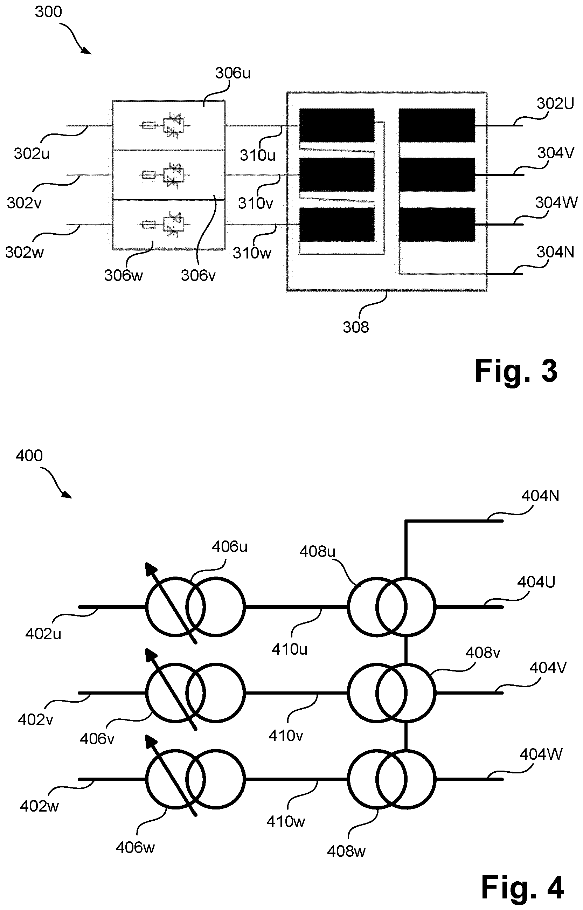

Figur 3 stellt eine mögliche Ausführung einer steuerbaren Stromquelle 300 dar, die zur Leistungssteuerung Thyristor-Leistungssteller verwendet. Die steuerbare Stromquelle weist eingangsseitig Anschlüsse an eine Stromversorgung, z.B. ein Stromversorgungsnetz, auf, wobei für jede Phase (hier beispielsweise 3) einer Wechselspannungsversorgung ein Eingang 302u, 302v, 302w vorgesehen ist. An den Eingängen liegen relativ hohe Spannungen an, typischerweise einige hundert bis einige tausend Volt, z.B. 400 V, 690 V oder 1,2 kV. Ausgangsseitig weist die Stromquelle Ausgänge 304U, 304V, 304W auf, die mit Stromanschlüssen eines regelbaren Reaktors verbunden werden, z.B. mit den Stromanschlüssen 40 eines der in den Figuren 1 oder 2 dargestellten Reaktoren. Weiterhin ist ausgangsseitig ein Anschluss 304N für einen Neutralleiter vorgesehen.

Die Stromquelle 300 weist Leistungssteller 306u, 306v, 306w, hier Thyristor-Leistungssteller, auf, mit denen die an den Eingängen anliegenden Spannungen unterbrochen bzw. zu einem Hochstromtransformator 308 über Leitungen 310u, 310v, 310w durchgesteuert werden können. Der mehrphasige Hochstromtransformator 308, hier beispielsweise in einer Dreiecks-/Stern-Ausführung, wobei der Anschluss 304N für einen Neutralleiter mit dem Sternpunkt verbunden ist, transformiert die zwischen den Eingängen anliegenden relativ hohen Spannungen in niedrigere Spannungen bei gleichzeitig höheren Stromstärken, die zur Einspeisung in die Rohrstrecken geeignet sind. Die Ausgangsspannung liegt bevorzugt in einem Bereich kleiner als 300 V, weiter bevorzugt kleiner oder gleich 150 V, noch weiter bevorzugt kleiner oder gleich 100 V, am meisten bevorzugt kleiner oder gleich 50 V.

Durch entsprechendes Ansteuern der Leistungssteller 306u, 306v, 306w, d.h. durch abwechselndes Unterbrechen und Durchsteuern (mittels der Thyristoren) der an den Eingängen anliegenden Spannungen zu dem Hochstromtransformator, kann die ausgangsseitig abgegebene Leistung gesteuert werden. Hierzu kann beim Ansteuern eine Pulsweiten-Modulation (PWM) verwendet werden. Bevorzugt werden von den Leistungsstellern nur ganze Wellen der eingangsseitig anliegenden Wechselspannungen durchgesteuert, d.h. es ein sogenannter Impulsgruppenbetrieb bzw. Vollschwingungs-Takt vorgesehen, bei dem vollständige Sinuszüge durchgeschaltet werden. Dies dient der Reduzierung von Oberschwingungen und des damit verbundenen Filteraufwands zur Einhaltung der Spannungsqualität am Versorgungsnetz.

Das Ansteuern der Leistungssteller erfolgt über nicht dargestellte Steuerleitungen, an denen Steuersignale angelegt werden, die auf von außen, d.h. durch die Steuervorrichtung 60, vorgegebenen Spannungsanforderungen basieren.

Figur 4 stellt eine andere mögliche Ausführung einer steuerbaren Stromquelle 400 dar, die zur Leistungssteuerung Stelltransformatoren verwendet und die eine voneinander unabhängige Änderung der Spannungen an den Ausgängen erlaubt. Die steuerbare Stromquelle 400 weist eingangsseitig Anschlüsse an eine Stromversorgung, z.B. ein Stromversorgungsnetz, auf, wobei für jede Phase (hier beispielsweise 3) einer Wechselspannungsversorgung ein Eingang 402u, 402v, 402w vorgesehen ist. An den Eingängen liegen entsprechend relativ hohe Spannungen an, typischerweise einige hundert bis einige tausend Volt, z.B. 400 V, 690 V oder 1,2 kV. Ausgangsseitig weist die Stromquelle Ausgänge 404U, 404V, 404W auf, die mit Stromanschlüssen eines regelbaren Reaktors verbunden werden, z.B. mit den Stromanschlüssen 40 eines der in den Figuren 1 oder 2 dargestellten Reaktoren. Weiterhin ist ausgangsseitig ein Anschluss 404N für einen Neutralleiter vorgesehen.

Die Stromquelle 400 umfasst Stelltransformatoren 406u, 406v, 406w, d.h. Transformatoren, deren ausgangsseitige Spannung in bestimmten Bereichen oder auch komplett, d.h. von 0 - 100%, steuerbar ist. Die bei entsprechend angeforderter Heizleistung relativ hohen Ausgangsspannungen der Stelltransformatoren werden von einphasigen Hochstromtransformatoren 408u, 408v, 408w, die mit den Stelltransformatoren über Leitungen 410u, 410v, 410w verbunden sind, in niedrigere Spannungen bzw. Ströme mit höherer Stromstärke transformiert und von den Hochstromtransformatoren an den Ausgängen 404U, 404V, 404W bereitgestellt. Die Ausgangsspannungen liegen bevorzugt in einem Bereich kleiner als 300 V, weiter bevorzugt kleiner oder gleich 150 V, noch weiter bevorzugt kleiner oder gleich 100 V, am meisten bevorzugt kleiner oder gleich 50 V. Der Anschluss 404N für einen Neutralleiter ist hier mit einem entsprechenden Anschluss an jedem der Hochstromtransformatoren verbunden.

Die Ausgangsleistungen können hier für jeden der Ausgänge 404U, 404V, 404W unabhängig von den anderen Ausgangsleistungen gesteuert werden, indem der zugehörige Stelltransformator 406u, 406v, 406w entsprechend angesteuert wird, d.h. indem die Ausgangspannung an dem jeweiligen Stelltransformator entsprechend eingestellt wird. Das Ansteuern der Stelltransformatoren erfolgt wieder über nicht dargestellte Steuerleitungen, an denen Steuersignale angelegt werden, die auf von außen, d.h. durch die Steuervorrichtung 60, vorgegebenen Spannungsanforderungen basieren.

Die Verwendung einer Stromquelle mit Stelltransformatoren weist, neben der unabhängigen Steuerbarkeit jeder einzelnen Spannung, weitere Vorteile auf. Zunächst können neben Oberschwingungen auch niederfrequente Spannungs-Oszillationen vermieden werden (die bei der Ausgestaltung mit Leistungssteller durch Ein-/Ausschaltvorgänge auftreten können). Diese niederfrequenten Oszillationen sind nachteilig, da sie im Bereich von Resonanzfrequenzen der Reaktionsrohre, auf die elektromagnetische Kräfte wirken, liegen können. Weiterhin sind die Spannungen bei Verwendung entsprechender Stelltransformatoren von 0 - 100% steuerbar, was beispielsweise beim An-/Abfahren oder bei Lastwechseln des Reaktors nützlich ist, ebenso können dadurch Einschaltströme begrenzt werden.

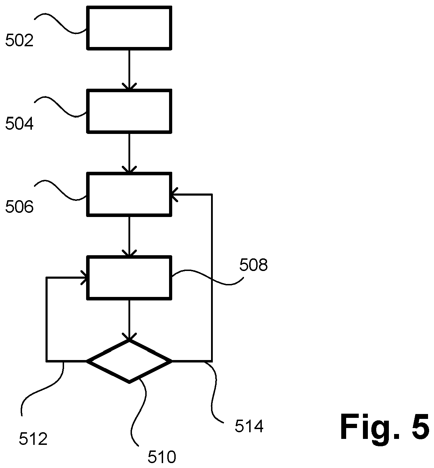

Figur 5 stellt den prinzipiellen Ablauf eines erfindungsgemäßen Verfahrens dar, wobei bevorzugt eine erfindungsgemäße Vorrichtung, wie etwa in Figur 1 oder Figur 2 beschrieben, verwendet wird, wobei die Steuervorrichtung eingerichtet ist, das Verfahren durchzuführen. Während des Verfahrens wird ein zu erhitzendes Prozessfluid oder werden mehrere zu erhitzende Prozessfluide durch ein oder mehrere Reaktionsrohre des Reaktors geleitet (Schritt 502).

In Schritt 504 werden zunächst Spannungen bzw. Ströme an Stromanschlüssen des Reaktors bereitgestellt. Dies erfolgt durch eine steuerbare Stromquelle. In Schritt 506 werden die Spannungen auf bestimmte Spannungswerte eingestellt, z.B. durch eine Steuervorrichtung, die mit der Stromquelle verbunden ist und diese steuert.

In Schritt 508 werden eine oder mehrere Messwerte erfasst, d.h. es werden Messwerte (etwa Temperaturwerte, Stromstärkenwerte) der Messgrößen (etwa Temperatur, Stromstärke) erfasst. Die Messwerte sind also die Werte der Messgrößen zu einem jeweiligen Messzeitpunkt. Dazu sind, wie vorstehend beschrieben (Figuren. 1, 2) Messeinrichtungen vorgesehen.

In Schritt 510 werden die erfassten Messwerte mit vorgegebenen Werten bzw. Zielwerten der entsprechenden Messgrößen verglichen. Dabei wird festgestellt, ob die erfassten Messwerte den vorbestimmten Werten der Messgrößen entsprechen. Hier ist "entsprechen" in einem allgemeinen Sinn zu verstehen, d.h., dass die erfassten Messwerte den vorbestimmten Werten gleichen, diesen möglichst nahe kommen oder auch in bestimmten Bereichen um die vorbestimmten Werte liegen.

Wenn die erfassten Messwerte den vorbestimmten Messgrößen-Werten entsprechen, werden die Messgrößen erneut gemessen, d.h. die Messwerte werden erneut erfasst, es wird also zu Schritt 508 zurückgesprungen (Pfeil 512). Die Spannungen bleiben dann unverändert. Wenn andererseits die erfassten Messwerte den vorbestimmten Messgrößen-Werten nicht entsprechen, werden die Spannungen neu eingestellt, es wird also zu Schritt 506 zurückgesprungen (Pfeil 514). Die Spannungen und damit die Heizleistungen in den verschiedenen zugehörigen Rohrstrecken werden also geändert, so dass sich die Werte der Messgrößen ändern und anschließend bzw. nach mehreren Einstellungsschritten den vorbestimmten Messgrößen-Werten entsprechen. Hierzu ist beispielsweise in der Steuervorrichtung ein entsprechender Regelalgorithmus vorgesehen.

## Patentansprüche

1. Verfahren zur geregelten Durchführung einer chemischen Reaktion in einem Prozessfluid in einem Reaktor mit mehreren Reaktionsrohren (20, 20a, 20b, 20c), die eine Anzahl elektrisch beheizbarer Rohrstrecken (24, 24a, 24b, 24c) aufweisen, wobei mehrere Stromanschlüsse (40) vorgesehen sind, die in einem Stromeinspeisebereich (11) jeweils mit mindestens einer der Rohrstrecken verbunden sind, wobei in einem Stromabgabebereich (12) wenigstens ein Verbindungselement (42) vorgesehen ist und jede der Rohrstrecken mit einem Verbindungselement elektrisch leitend verbunden ist, wobei die chemische Reaktion eine der folgenden Reaktionen ist: Dampfspalten, Dampfreformierung, Trockenreformierung, Propandehydrierung, eine Reaktion mit Kohlenwasserstoffen, die zumindest teilweise bei mehr als 500°C durchgeführt wird, umfassend
Leiten (502) des Prozessfluids durch die mehreren Reaktionsrohre;
Bereitstellen (504) mehrerer veränderbarer Spannungen an den mehreren Stromanschlüssen, wobei die mehreren Spannungen als Phasen einer mehrphasigen Wechselspannung bereitgestellt werden, so dass das wenigstens eine Verbindungselement (42) einen Sternpunkt bildet;
Einstellen (506) der mehreren Spannungen;
Erfassen (508) eines oder mehrerer Messwerte entsprechend einer oder mehrerer Messgrößen;
Verändern der mehreren eingestellten Spannungen, so dass die erfassten Messwerte vorbestimmten Werten bzw. Wertebereichen der Messgrößen entsprechen.

2. Verfahren nach einem der vorstehenden Ansprüche, wobei die Messgrößen eines oder mehreres umfassen von
- wenigstens eine Temperatur,
- wenigstens eine Stromstärke,
- wenigstens eine Stoffzusammensetzung.

3. Verfahren nach einem der vorstehenden Ansprüche, wobei die mehreren Spannungen in gleicher Weise verändert werden.

4. Verfahren nach einem der vorstehenden Ansprüche, wobei die mehreren Spannungen unabhängig voneinander verändert werden.

5. Verfahren nach einem der vorstehenden Ansprüche wobei die eine oder mehreren Messgrößen eines oder beides umfassen von
- einer an einem Rohrausgang der mehreren Reaktionsrohre gemessenen Rohrausgangs-Temperatur des Prozessfluids, und
- einer an einem Rohrausgang der mehreren Reaktionsrohre gemessenen Stoffzusammensetzung des Prozessfluids;
wobei bevorzugt die mehreren Spannungen so verändert werden, dass die gemessene Rohrausgangs-Temperatur und/oder die gemessene Stoffzusammensetzung einer vorbestimmten Rohrausgangs-Temperatur und/oder einer vorbestimmten Stoffzusammensetzung gleicht oder möglichst nahe kommt.

6. Verfahren nach einem der vorstehenden Ansprüche, wobei die eine oder mehreren Messgrößen eines oder beides umfassen von
- zwei oder mehreren an mit verschiedenen Stromanschlüssen verbundenen Rohrstrecken gemessenen Rohrstrecken-Temperaturen,
- zwei oder mehreren an verschiedenen Stromanschlüssen gemessenen Stromanschluss-Stromstärken;
wobei bevorzugt die mehreren Spannungen an den verschiedenen Stromanschlüssen so gesteuert werden, dass die gemessenen Rohrstrecken-Temperaturen vorbestimmten Rohrstrecken-Temperaturen entsprechen und/oder aus den Stromstärken berechnete Leistungsabgaben an die mit den verschiedenen Stromanschlüssen verbundenen Rohrstücke vorbestimmten Leistungsabgaben entsprechen.

7. Verfahren nach einem der vorstehenden Ansprüche, wobei die eine oder mehreren Messgrößen eines oder beides umfassen von
- einer an einem Neutralleiter gemessenen Neutralleiter-Stromstärke,
- zwei oder mehreren an verschiedenen Stromanschlüssen gemessenen Stromanschluss-Stromstärken;
wobei bevorzugt die mehreren Spannungen so verändert werden, dass die Neutralleiter-Stromstärke minimiert wird und/oder eine unter Berücksichtigung der relativen Phasen berechnete Summe der Stromanschluss-Stromstärken minimiert wird.

8. Vorrichtung zur geregelten Durchführung einer chemischen Reaktion in einem Prozessfluid, umfassend
einen Reaktor (100, 200) mit mehreren Reaktionsrohren (20, 20a, 20b, 20c), die eine Anzahl elektrisch beheizbarer Rohrstrecken (24, 24a, 24b, 24c) aufweisen, wobei mehrere Stromanschlüsse (40) vorgesehen sind, die in einem Stromeinspeisebereich (11) jeweils mit mindestens einer der Rohrstrecken verbunden sind, wobei in einem Stromabgabebereich (12) wenigstens ein Verbindungselement (42) vorgesehen ist und jede der Rohrstrecken mit einem Verbindungselement verbunden ist, so dass dieses einen Sternpunkt bildet; **gekennzeichnet durch**
eine steuerbare Stromquelle (50), die eingerichtet ist, mehrere veränderbare Spannungen an den mehreren Stromanschlüssen bereitzustellen, wobei die Stromquelle die mehreren Spannungen als Phasen einer mehrphasigen Wechselspannung bereitstellt;
eine oder mehrere Messeinrichtungen (62, 62a, 62b, 62c, 63, 63a, 63b, 63c, 64, 64a, 64b, 64c, 66, 67, 67a, 67b, 67c), die eingerichtet sind, eine oder mehrere Messgrößen zu erfassen;
eine Steuervorrichtung (60), die mit der Stromquelle und der einen oder den mehreren Messeinrichtungen zur Kommunikation verbunden ist und die eingerichtet ist, die Stromquelle in Abhängigkeit von der einen oder den mehreren Messgrößen zu steuern;
wobei die Steuervorrichtung eingerichtet ist, ein Verfahren nach einem der Ansprüche 1 bis 7 durchzuführen.

9. Vorrichtung nach Anspruch 8, wobei der Reaktor einen Reaktorbehälter (10) umfasst; wobei der Stromeinspeisebereich (11) innerhalb des Reaktorbehälters angeordnet ist und/oder der Stromabgabebereich (12) innerhalb des Reaktorbehälters angeordnet ist.

10. Vorrichtung nach einem der Ansprüche 8 oder 9, wobei die eine oder die mehreren Messeinrichtungen eines oder mehreres umfassen von
- einem oder mehreren Temperatursensoren,
- einem oder mehreren Stromsensoren, die eingerichtet sind,
- einem oder mehreren Stoffzusammensetzungssensoren.

11. Vorrichtung nach einem der Ansprüche 8 oder 10, wobei die Stromquelle (50) eingerichtet ist, die mehreren Spannungen gemeinsam in gleicher Weise zu verändern, wobei bevorzugt die Stromquelle Leistungssteller (306u, 306v, 306w), insbesondere Thyristor-Leistungssteller, umfasst, mittels derer die Spannungen veränderbar sind.

12. Vorrichtung nach einem der Ansprüche 8 oder 10, wobei die Stromquelle (50) eingerichtet ist, die mehreren Spannungen unabhängig voneinander zu verändern, wobei bevorzugt die Stromquelle für jede Spannung einen Stelltransformator (406u, 406v, 406w) oder eine Leistungselektronik, die die Funktionalität eines Stelltransformators implementiert, umfasst.

13. Vorrichtung nach einem der Ansprüche 8 bis 12, wobei die eine oder die mehreren Messeinrichtungen eines oder beides umfassen von
- wenigstens einem Temperatursensor (62, 62a, 62b, 62c), der an einem Rohrausgang (23, 23a, 23b, 23c) der mehreren Reaktionsrohre angeordnet ist, um eine Temperatur des Prozessfluids zu messen,
- wenigstens einem Stoffzusammensetzungssensor (64, 64a, 64b, 64c), der an einem Rohrausgang der mehreren Reaktionsrohre angeordnet ist, um eine Stoffzusammensetzung des Prozessfluids zu messen;
wobei die Steuervorrichtung bevorzugt eingerichtet ist, das Verfahren nach Anspruch 5 durchzuführen.

14. Vorrichtung nach einem der Ansprüche 8 bis 13, wobei die eine oder die mehreren Messeinrichtungen eines oder beides umfassen von
- zwei oder mehr Rohrstrecken-Temperatursensoren (63, 63a, 63b, 63c), die an mit verschiedenen Stromanschlüssen verbundenen Rohrstrecken angeordnet sind,
- zwei oder mehr Stromanschluss-Stromsensoren (67, 67a, 67b, 67c), die an verschiedenen Stromanschlüssen angeordnet sind;
wobei die Steuervorrichtung bevorzugt eingerichtet ist, das Verfahren nach Anspruch 6 durchzuführen.

15. Vorrichtung nach einem der Ansprüche 8 bis 14, wobei der Reaktor mehrere Stromanschlüsse umfasst und wobei die eine oder die mehreren Messeinrichtungen eines oder beides umfassen von
- einen Neutralleiter-Stromsensor (66), der an einem mit dem Verbindungselement verbundenen Neutralleiter (44) angeordnet ist,
- mehrere Stromanschluss-Stromsensoren (67, 67a, 67b, 67c), die an verschiedenen Stromanschlüssen angeordnet sind;
wobei die Steuervorrichtung bevorzugt eingerichtet ist, das Verfahren nach Anspruch 7 durchzuführen.

## Claims

1. A method for the controlled performance of a chemical reaction in a process fluid in a reactor having a plurality of reaction tubes (20, 20a, 20b, 20c) which have a number of electrically heatable tube sections (24, 24a, 24b, 24c), wherein a plurality of current connections (40) are provided, which are each connected to at least one of the tube sections in a current feed region (11), wherein at least one connecting element (42) is provided in a current delivery region (12), and each of the tube sections is electrically conductively connected to a connecting element, wherein the chemical reaction is one of the following reactions: steam cracking, steam reforming, dry reforming, propane dehydrogenation, a reaction with hydrocarbons which is carried out at least in part at more than 500°C, comprising
directing (502) the process fluid through the plurality of reaction tubes;
providing (504) a plurality of changeable voltages at the plurality of current connections, wherein the plurality of voltages are provided as phases of a multiphase AC voltage, such that the at least one connecting element (42) forms a star point;
adjusting (506) the plurality of voltages;
acquiring (508) one or more measurement values corresponding to one or more measurement variables;
changing the plurality of adjusted voltages, so that the acquired measurement values correspond to predetermined values or value ranges of the measurement variables.

2. The method according to one of the preceding claims, wherein the measurement variables comprise one or more of
- at least one temperature,
- at least one amperage,
- at least one substance composition.

3. The method according to either of the preceding claims, wherein the plurality of voltages are changed in the same way.

4. The method according to any of the preceding claims, wherein the plurality of voltages are changed independently of one another.

5. The method according to any of the preceding claims, wherein the one or more measurement variables comprise one or both of
- a tube outlet temperature of the process fluid measured at a tube outlet of the plurality of reaction tubes, and
- a substance composition of the process fluid measured at a tube outlet of the plurality of reaction tubes;
wherein the plurality of voltages are preferably changed such that the measured tube outlet temperature and/or the measured substance composition is equal to or as close as possible to a predetermined tube outlet temperature and/or a predetermined substance composition.

6. The method according to any of the preceding claims, wherein the one or more measurement variables comprise one or both of
- two or more tube section temperatures measured at tube sections connected to different current connections,
- two or more current connection amperages measured at different current connections;
wherein the plurality of voltages at the different current terminals are preferably controlled such that the measured tube path temperatures correspond to predetermined tube section temperatures and/or power outputs calculated from the current intensities correspond to predetermined power outputs to the tube sections connected to the various power terminals.

7. The method according to any of the preceding claims, wherein the one or more measurement variables comprise one or both of
- a neutral conductor amperage measured at a neutral conductor,
- two or more current connection amperages measured at different current connections;
wherein the plurality of voltages are preferably changed such that the neutral conductor amperage is minimized and/or a sum of the current connection amperages calculated taking into account the relative phases is minimized.

8. A device for the controlled performance of a chemical reaction in a process fluid, comprising
a reactor (100, 200) having a plurality of reaction tubes (20, 20a, 20b, 20c) which have a number of electrically heatable tube sections (24, 24a, 24b, 24c), wherein a plurality of current connections (40) are provided, which are each connected to at least one of the tube sections in a current feed region (11), wherein at least one connecting element (42) is provided in a current delivery region (12), and each of the tube sections is connected to a connecting element, such that said connecting element forms a star point; **characterized by**
a controllable current source (50) which is designed to provide a plurality of changeable voltages at the plurality of current connections, wherein the current source provides the plurality of voltages as phases of a multiphase AC voltage;
one or more measuring devices (62, 62a, 62b, 62c, 63, 63a, 63b, 63c, 64, 64a, 64b, 64c, 66, 67, 67a, 67b, 67c) which are designed to acquire one or more measurement variables;
a control device (60) which is connected to the current source and the one or more measuring devices for communication and is designed to control the current source depending on the one or more measurement variables;
wherein the control device is designed to perform a method according to any of claims 1 to 7.

9. The device according to claim 8, wherein the reactor comprises a reactor vessel (10) wherein the current feed region (11) is arranged within the reactor vessel and/or the current delivery region (12) is arranged within the reactor vessel.

10. The device according to either claim 8 or claim 9, wherein the one or more measuring devices comprise one or more of
- one or more temperature sensors,
- one or more current sensors which are designed to
- one or more substance composition sensors.

11. The device according to either claim 8 or claim 10, wherein the current source (50) is designed to change the plurality of voltages together in the same way, wherein the current source preferably comprises power controllers (306u, 306v, 306w), in particular thyristor power controllers, by means of which the voltages can be changed.

12. The device according to either claim 8 or claim 10, wherein the current source (50) is designed to change the plurality of voltages independently of one another, wherein the current source preferably comprises, for each voltage, a control transformer (406u, 406v, 406w) or power electronics which implement the functionality of a control transformer.

13. The device according to any of claims 8 to 12, wherein the one or more measuring devices comprise one or both of
- at least one temperature sensor (62, 62a, 62b, 62c) which is arranged on a tube outlet (23, 23a, 23b, 23c) of the plurality of reaction tubes in order to measure a temperature of the process fluid,
- at least one substance composition sensor (64, 64a, 64b, 64c) which is arranged on a tube outlet of the plurality of reaction tubes in order to measure a substance composition of the process fluid;
wherein the control device is preferably designed to perform the method according to claim 5.

14. The device according to any of claims 8 to 13, wherein the one or more measuring devices comprise one or both of
- two or more tube section temperature sensors (63, 63a, 63b, 63c) which are arranged on tube sections connected to different current connections,
- two or more current connection current sensors (67, 67a, 67b, 67c) arranged at different current connections;
wherein the control device is preferably designed to perform the method according to claim 6.

15. The device according to any of claims 8 to 14, wherein the reactor comprises a plurality of current connections and wherein the one or more measuring devices comprise one or both of
- a neutral conductor current sensor (66) which is arranged on a neutral conductor (44) connected to the connecting element,
- a plurality of current connection current sensors (67, 67a, 67b, 67c) arranged at different current connections;
wherein the control device is preferably designed to perform the method according to claim 7.

## Revendications

1. Procédé permettant la mise en oeuvre régulée d'une réaction chimique dans un fluide de processus dans un réacteur comportant plusieurs tubes de réaction (20, 20a, 20b, 20c) qui présentent un certain nombre de sections de tube (24, 24a, 24b, 24c) pouvant être chauffées électriquement, dans lequel plusieurs connexions électriques (40) sont prévues, lesquelles sont reliées respectivement à au moins l'une des sections de tube dans une zone d'alimentation en courant (11), dans lequel, dans une zone de sortie de courant (12), au moins un élément de liaison (42) est prévu et chacune des sections de tube est reliée d'une manière électriquement conductrice à un élément de liaison, dans lequel la réaction chimique est l'une des réactions suivantes : vapocraquage, vaporeformage, reformage à sec, déshydrogénation du propane, réaction avec des hydrocarbures mise en oeuvre au moins partiellement à plus de 500 °C, comprenant
l'acheminement (502) du fluide de processus par les tubes de réaction ;
la fourniture (504) de plusieurs tensions pouvant être modifiées aux connexions électriques, dans lequel les tensions sont fournies comme phases d'une tension alternative multiphase, de sorte que l'au moins un élément de liaison (42) forme un point neutre ;
le réglage (506) des tensions ;
la détection (508) d'une ou de plusieurs valeurs de mesure en fonction d'une ou de plusieurs grandeurs de mesure ;
la modification des tensions réglées, de sorte que les valeurs de mesure détectées correspondent à des valeurs ou plages de valeurs prédéterminées des grandeurs de mesure.

2. Procédé selon l'une des revendications précédentes, dans lequel les grandeurs de mesure comprennent un ou plusieurs éléments parmi
- au moins une température,
- au moins une intensité de courant,
- au moins une composition de matière.

3. Procédé selon l'une des revendications précédentes, dans lequel les tensions sont modifiées de la même manière.

4. Procédé selon l'une des revendications précédentes, dans lequel les tensions sont modifiées indépendamment les unes des autres.

5. Procédé selon l'une des revendications précédentes, dans lequel la ou les grandeurs de mesure comprennent un élément ou les deux éléments parmi
- une température de sortie de tube du fluide de processus, mesurée au niveau d'une sortie de tube des tubes de réaction, et
- une composition de matière du fluide de processus, mesurée au niveau d'une sortie de tube des tubes de réaction ;
dans lequel les tensions sont de préférence modifiées de sorte que la température de sortie de tube mesurée et/ou la composition de matière mesurée sont identiques ou se rapprochent autant que possible d'une température de sortie de tube prédéterminée et/ou d'une composition de matière prédéterminée.

6. Procédé selon l'une des revendications précédentes, dans lequel la ou les grandeurs de mesure comprennent un élément ou les deux éléments parmi
- deux températures de section de tube ou plus, mesurées au niveau de sections de tube reliées à différentes connexions électriques,
- deux intensités de courant de connexion électrique ou plus, mesurées au niveau de différentes connexions électriques ;
dans lequel les tensions sont de préférence commandées au niveau des différentes connexions électriques de sorte que les températures de section de tube mesurées correspondent à des températures de section de tube prédéterminées et/ou que des puissances de sortie calculées à partir des intensités de courant au niveau des pièces de tube reliées aux différentes connexions électriques correspondent à des puissances de sortie prédéterminées.

7. Procédé selon l'une des revendications précédentes, dans lequel la ou les grandeurs de mesure comprennent un élément ou les deux éléments parmi
- une intensité de courant de fil neutre mesurée au niveau d'un fil neutre,
- deux intensités de courant de connexion électrique ou plus, mesurées au niveau de différentes connexions électriques ;
dans lequel les tensions sont de préférence modifiées de sorte que l'intensité de courant de fil neutre est réduite au minimum et/ou qu'une somme, calculée en tenant compte des phases relatives, des intensités de courant de connexion électrique est réduite au minimum.

8. Dispositif permettant la mise en oeuvre régulée d'une réaction chimique dans un fluide de processus, comprenant
un réacteur (100, 200) comportant plusieurs tubes de réaction (20, 20a, 20b, 20c) qui présentent un certain nombre de sections de tube (24, 24a, 24b, 24c) pouvant être chauffées électriquement, dans lequel plusieurs connexions électriques (40) sont prévues, lesquelles sont reliées respectivement à au moins l'une des sections de tube dans une zone d'alimentation en courant (11), dans lequel, dans une zone de sortie de courant (12), au moins un élément de liaison (42) est prévu et chacune des sections de tube est reliée à un élément de liaison de sorte que celui-ci forme un point neutre ; **caractérisé par**
une source de courant (50) pouvant être commandée qui est configurée pour fournir plusieurs tensions pouvant être modifiées aux connexions électriques, dans lequel la source de courant fournit les tensions comme phases d'une tension alternative multiphase ;
un ou plusieurs appareils de mesure (62, 62a, 62b, 62c, 63, 63a, 63b, 63c, 64, 64a, 64b, 64c, 66, 67, 67a, 67b, 67c) qui sont configurés pour détecter une ou plusieurs grandeurs de mesure ;
un dispositif de commande (60) qui est relié pour la communication à la source de courant et au ou aux appareils de mesure et qui est configuré pour commander la source de courant en fonction de la ou des grandeurs de mesure ;
dans lequel le dispositif de commande est configuré pour mettre en oeuvre un procédé selon l'une des revendications 1 à 7.

9. Dispositif selon la revendication 8, dans lequel le réacteur comprend une cuve de réacteur (10) ; dans lequel la zone d'alimentation en courant (11) est disposée à l'intérieur de la cuve de réacteur et/ou la zone de sortie de courant (12) est disposée à l'intérieur de la cuve de réacteur.

10. Dispositif selon l'une des revendications 8 ou 9, dans lequel le ou les appareils de mesure comprennent un ou plusieurs éléments parmi
- un ou plusieurs capteurs de température,
- un ou plusieurs capteurs de courant qui sont configurés,
- un ou plusieurs capteurs de composition de matière.

11. Dispositif selon l'une des revendications 8 ou 10, dans lequel la source de courant (50) est configurée pour modifier les tensions ensemble de la même manière, dans lequel la source de courant comprend de préférence des régulateurs de puissance (306u, 306v, 306w), en particulier des régulateurs de puissance à thyristor, au moyen desquels les tensions peuvent être modifiées.

12. Dispositif selon l'une des revendications 8 ou 10, dans lequel la source de courant (50) est configurée pour modifier les tensions indépendamment les unes des autres, dans lequel la source de courant comprend de préférence, pour chaque tension, un transformateur de réglage (406u, 406v, 406w) ou une électronique de puissance qui implémente la fonctionnalité d'un transformateur de réglage.

13. Dispositif selon l'une des revendications 8 à 12, dans lequel le ou les appareils de mesure comprennent un élément ou les deux éléments parmi
- au moins un capteur de température (62, 62a, 62b, 62c) disposé au niveau d'une sortie de tube (23, 23a, 23b, 23c) des tubes de réaction pour mesurer une température du fluide de processus,
- au moins un capteur de composition de matière (64, 64a, 64b, 64c) disposé au niveau d'une sortie de tube des tubes de réaction pour mesurer une composition de matière du fluide de processus ;
dans lequel le dispositif de commande est de préférence configuré pour mettre en oeuvre le procédé selon la revendication 5.

14. Dispositif selon l'une des revendications 8 à 13, dans lequel le ou les appareils de mesure comprennent un élément ou les deux éléments parmi
- deux capteurs de température de section de tube (63, 63a, 63b, 63c) ou plus, disposés au niveau de sections de tube reliées à différentes connexions électriques,
- deux capteurs de courant de connexion électrique (67, 67a, 67b, 67c) ou plus, disposés au niveau de différentes connexions électriques ;
dans lequel le dispositif de commande est de préférence configuré pour mettre en oeuvre le procédé selon la revendication 6.

15. Dispositif selon l'une des revendications 8 à 14, dans lequel le réacteur comprend plusieurs connexions électriques et dans lequel le ou les appareils de mesure comprennent un élément ou les deux éléments parmi
- un capteur de courant de fil neutre (66) disposé au niveau d'un fil neutre (44) relié à l'élément de liaison,
- plusieurs capteurs de courant de connexion électrique (67, 67a, 67b, 67c) disposés au niveau de différentes connexions électriques ;
dans lequel le dispositif de commande est de préférence configuré pour mettre en oeuvre le procédé selon la revendication 7.
